Europäisches Patentamt

European Patent Office

Office européen des brevets

(19)

(11) Veröffentlichungsnummer: **0 318 917**
**A2**

(12) **EUROPÄISCHE PATENTANMELDUNG**

(21) Anmeldenummer: **88119880.8**

(22) Anmeldetag: **29.11.88**

(51) Int. Cl.⁴: **G01F 23/28**

(30) Priorität: **30.11.87 DE 3740598**

(43) Veröffentlichungstag der Anmeldung:
**07.06.89 Patentblatt 89/23**

(84) Benannte Vertragsstaaten:
**BE CH DE FR GB IT LI NL**

(71) Anmelder: **VEGA Grieshaber GmbH & Co.**

**D-7620 Wolfach(DE)**

(72) Erfinder: **Benz, Karl**
**Gerbergasse 9**
**D-7622 Schiltach(DE)**

(74) Vertreter: **Strasse, Joachim, Dipl.-Ing. et al**
**Strasse und Stoffregen European Patent**
**Attorneys Zweibrückenstrasse 17**
**D-8000 München 2(DE)**

(54) **Schwingeinheit für Füllstand-Vibrations-Grenzschalter.**

(57) Eine Vorrichtung zur Feststellung des Füllstandes in einem Behälter weist einen Schwinger auf, bei dem zwei Drehschwinger (10, 12) von gleicher Resonanzfrequenz entgegengesetzt schwingen, wobei die Schwingungselemente (10, 12) koaxial angeordnet sind, eine gemeinsame Drehachse haben, gleichgroße Massen besitzen und einen gemeinsamen Massenschwerpunkt. Bei der erfindungsgemäßen Ausgestaltung sind die beiden Schwingungselemente (10, 12) an einer gemeinsamen als Rückholfeder dienenden Membran (14) befestigt, wodurch ein gemeinsamer Antrieb beider Schwingungselemente (10, 12) ermöglicht wird.

**Fig.1**

## SCHWINGEINHEIT FÜR FÜLLSTAND-VIBRATIONS-GRENZSCHALTER

Die Erfindung geht aus von einer Vorrichtung zur Feststellung eines bestimmten Füllstandes in einem Behälter mit einem Schwingungsgebilde, welches zwei mit gleicher Resonanzfrequenz und in entgegengesetztem Drehsinn schwingende und im Abstand zueinander koaxial angeordneten Schwingungselemente aufweist, wobei das äußere Schwingungselement das innere Schwingungselement zumindest teilweise umfaßt, so daß die Schwingungen des Schwingungsgebildes bei Berührung des Füllguts mit dem äußeren Schwingungselement gedämpft werden, wobei sowohl der Antrieb des Schwingungsgebildes als auch die Erfassung der Schwingungsamplitude mittels elektromechanischer Umformer in Form von piezo-elektrischen Elementen erfolgt, wie sie beispielsweise aus der EP 0 089 336 bekannt sind. Hierdurch wird eine präzise Überwachung der Füllstandshöhe in einem Behälter ermöglicht, unabhängig von den Einspannverhältnissen des Schwingungsgebildes und für nahezu beliebige Füllgüter großer und geringer Dichte.

Die bisher bekannten koaxial aufgebauten Drehschwingsysteme hatten den Nachteil, daß die elastische Befestigung der beiden Schwingungselemente getrennt an zwei eigenständigen Federelementen erfolgte. Dies hatte zur Folge, daß ein gemeinsamer Antrieb beider Schwingungselemente nicht möglich war.

Die Erfindung steht daher unter der Aufgabe eine Vorrichtung der eingangs genannten Art derart weiterzubilden, daß beide Schwingungselemente des Drehschwingsystems gemeinsam angetrieben werden können.

Die Aufgabe wurde durch die Verwendung eines gemeinsamen Federelements für die Befestigung beider Schwingungselemente gelöst.

Ein Drehschwingsystem obengenannter Art besteht aus zwei koaxial zueinander angeordneten Schwingungselementen, die sich zumindest teilweise im Abstand zueinander umfassen. Als Federelement für diese Schwingungselemente dient eine Membran an der beide Schwingungselemente mit ihrem einen Ende befestigt sind.

Über diese Membran werden die Schwingungselemente angetrieben und es erfolgt über sie auch die Messung der Schwingungsamplitude.

Die Schwingungselemente schwingen gegenläufig zueinander. Sie haben gleich große Massen, einen gemeinsamen Massenschwerpunkt sowie eine gemeinsame Drehachse, wodurch sich ihre Drehmomente gegenseitig aufheben.

Die Membran wird durch die gegenläufigen Schwingungselemente ausgelenkt, wobei auf ihr Schwingungsknoten, das heißt Punkte, die sich nicht bewegen, entstehen. Diese Punkte werden benutzt, um die Membran selber am Behälter, vorzugsweise über ein Einschraubteil, zu befestigen. Dadurch, daß die Membranbefestigung an diesen stellen angreift, wird das System nicht bedämpft und es fließt auch keine Schwingungsenergie zum Behälter hin ab.

Durch mechanische Fertigungstoleranzen ist es möglich, daß die Membranbefestigung nicht genau an den Schwingungsknoten angreift. Damit dann trotzdem keine Schwingenergie abfließt, kann zwischen Membranbefestigung und Behälter noch eine Entkopplungsmembran angebracht werden. Antrieb und Detektion der Schwingung erfolgen vorzugsweise über Piezoscheiben, die direkt auf der Membran, an der die beiden Schwingungselemente befestigt sind, aufgebracht sind. Das bedeutet aber, daß im Falle eines defekten Piezos eine Reparatur unmöglich ist und die ganze Schwingungseinheit ausgewechselt werden muß.

Um dies zu vermeiden kann die Antriebs- und Detektionseinheit abnehmbar ausgeführt werden, wie in Anspruch 4 ausgeführt, wobei die Verbindung zwischen Piezos und Membram über einen Stößel hergestellt wird.

Sobald der äußere Schwingungskörper mit dem Füllgut in Berührung kommt, wird die Schwingung gedämpft, was dann zur Registrierung des Füllstands verwendet wird.

Weitere Einzelheiten, Vorteile und Merkmale der Erfindung ergeben sich aus den in der Zeichnung dargestellten bevorzugten Ausführungsformen.

Es zeigen

Fig. 1: Eine geschnittene Seitenansicht des Drehschwingsystems

Fig. 2: Eine Variante des in Fig. 1 dargestellten Systems

Fig. 3a, 3b, 3c: Den Schwingungsverlauf der gemeinsamen Befestigungsmembran der Schwingungskörper.

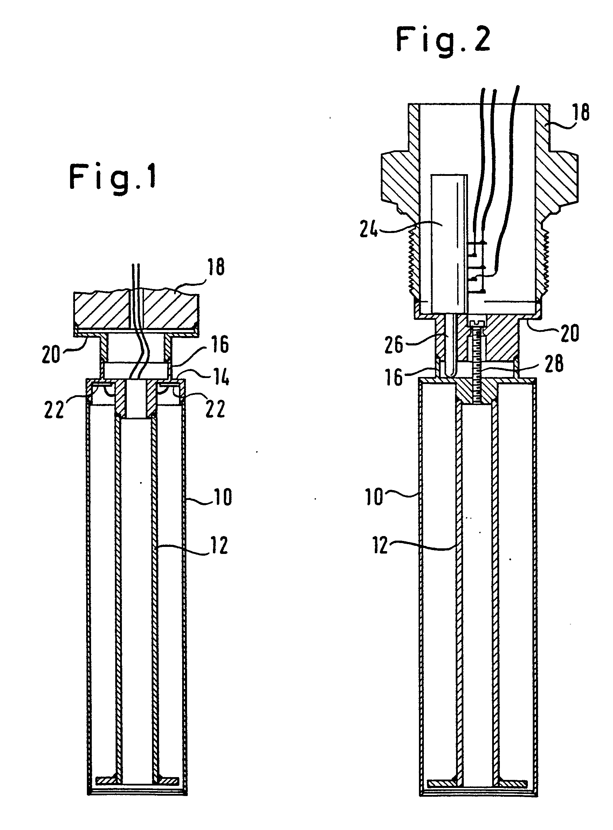

In Fig. 1 ist in Schnittdarstellung ein erstes Ausführungsbeispiel einer Schwingeinheit für Füllstand-Vibrations-Grenzschalter dargestellt. Sie besteht aus zwei koaxial zueinander angeordneten Schwingungselementen 10 und 12, die sich zumindest teilweise im Abstand zueinander umfassen. Beide Schwingungselemente sind rohrförmig ausgebildet.

Die beiden Schwingungselemente 10, 12 sind an ihrem oberen freien Ende mit einer als Rückholfeder wirkenden gemeinsamen Ringmembran 14 verbunden.

Die beiden gegenläufig zueinander schwingenden Schwingungselemente 10, 12 haben gleich große Massen und einen gemeinsamen Massenschwerpunkt sowie eine gemeinsame Drehachse, so daß sich ihre Drehmomente gegenseitig aufheben.

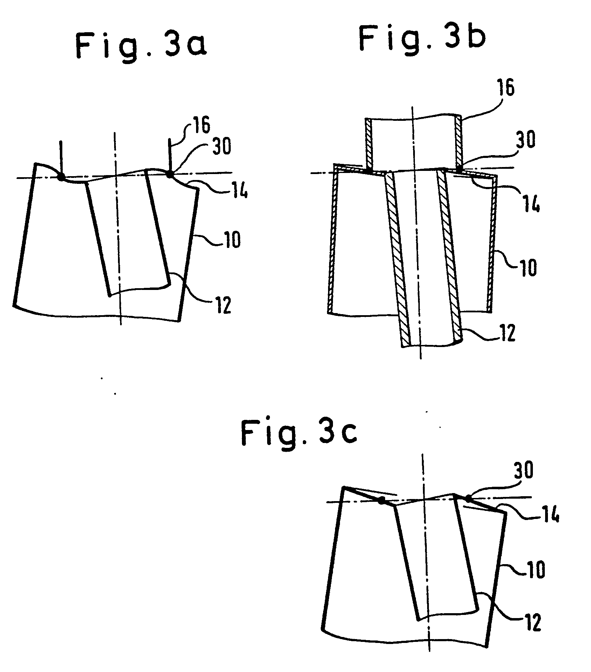

Beim gegenläufigen Schwingen der beiden Schwingungselemente 10, 12 entsteht auf der ge-meinsamen Ringmembran 14 ein Schwingungskno-ten 30 zwischen den beiden Schwingungselementen. Fig. 3a und 3b zeigen, daß auch bei unterschiedlicher Auslenkung der Schwingungselemente 10, 12 der Schwingungsknoten 30 stets an der gleichen Stelle bleibt.

Im Bereich dieses Schwingungsknoten 30 ist auf der gegenüberliegenden Membranseite ein Be-festigungsring 16 angebracht. Dieser Befestigungs-ring 16 muß genau über dem Schwingungsknoten 30 liegen, so daß ohne Bedämpfung des Systems eine Befestigung an einem Einschraubteil 18 stattfinden kann, ohne daß über das Einschraubteil 18 Schwingenergie abfließt.

Durch mechanische Fertigungstoleranzen ist es möglich, daß der Befestigungsring 16 nicht exakt über dem Schwingungsknoten 30 liegt und somit ein geringer Teil der Schwingenergie abfließen könnte. Um dies zu verhindern kann, wie in Fig. 1 dargestellt, zwischen Befestigungsring 16 und Einschraubteil 18 eine Entkopplungsmembran 20 angebracht werden.

Antrieb und Detektion des Schwingsystems entsprechend Fig. 1 erfolgen über zwei aufgeklebte Piezoscheiben 22. Im Falle eines defekten Piezos ist eine Reparatur nicht möglich, es muß das ganze System ausgetauscht werden.

In Fig. 2 ist daher ein Schwingsystem mit aus-wechselbarer Antriebs- und Detektionseinheit dar-gestellt. Das Einschraubteil 18 enthält ein metallisches Joch 24, in welchem ein Piezostapel untergebracht ist. Ein Stößel 26 stellt die Verbindung zwischen der Ringmembran 14 und dem im Joch 24 gelagerten Piezostapel her. Um die Ringmembran 14 möglichst wenig zu belasten, ist der Stößel 26 möglichst dicht am Befestigungsring 16 plaziert, so daß er nahe beim Schwingungsknoten 30 mit kurzem Hebelarm angreift.

Um ein Druchbiegen der Membranmitte in axialer Richtung zu verhindern, ist im Zentrum der Membran 14 eine Stützschraube 28 federelastisch angeordnet.

In Fig. 3a, 3b und 3c ist die Verformung der Ringmembran 14 bei Auslenkung der Schwingungselemente 10 und 12 näher dargestellt. In Fig 3a ist die tatsächlich bogenförmige Verformung der Ringmembran 14 dargestellt, während in den Fig.

3b und 3c der Verformungsverlauf der Ringmembran 14 nur noch schematisch eckig dargestellt ist. Es wird deutlich, daß auch bei unterschiedlicher Auslenkung der Schwingungselemente 10 und 12 der Schwingungsknoten 30 stets an der gleichen Stelle bleibt.

## Ansprüche

1. Vorrichtung zur Feststellung eines bestimmten Füllstandes in einem Behälter mit einem Schwingungsgebilde, welches zwei mit gleicher Resonanzfrequenz und in entgegengesetztem Drehsinn schwingende und im Abstand zueinander koaxial angeordnete Schwingungselemente (10, 12) aufweist, wobei das äußere Schwingungselement (10) das innere Schwingungselement (12) zumindest teilweise umfaßt, so daß die Schwingungen des Schwingungsgebildes bei Berührung des Füllguts mit dem äußeren Schwingungselement (10) gedämpft werden, wobei sowohl der Antrieb des Schwingungsgebildes als auch die Erfassung der Schwingungsamplitude mittels elektromechanischer Umformer in Form von piezoelektrischen Elementen (22) erfolgt,
**dadurch gekennzeichnet,**
daß sowohl das äußere Schwingungselement (10) als auch das innere Schwingungselement (12) an einer gemeinsamen Ringmembran (14) befestigt sind.

2. Vorrichtung nach Anspruch 1,
**dadurch gekennzeichnet,**
daß die Befestigung der Ringmembran (14), mit der diese starr mit dem Behälter, vorzugsweise über ein Einschraubstück (18), verbunden ist, an den Schwingungsknoten der Ringmembran (14) angreift.

3. Vorrichtung nach Anspruch 1 oder 2,
**dadurch gekennzeichnet,**
daß die Befestigung der Ringmembran (14) nicht starr mit dem Behälter verbunden ist, sondern ela-stisch durch Zwischenschaltung einer Entkopp-lungsmembran (20), die verhindert, daß Schwingenergie zum Behälter hin abfließt.

4. Vorrichtung nach einem der Ansprüche 1 bis 3,
**dadurch gekennzeichnet,**
daß die Piezoscheiben (22), die zum Antrieb und zur Detektion des Schwingsystems verwendet werden, abnehmbar angebracht sind und ihre Verbindung zur Ringmembran (14) mittels eines Stößels (26) erfolgt.

5. Vorrichtung nach Anspruch 4,
**dadurch gekennzeichnet,**
daß in der Mitte der Ringmembran (14) eine Stützschraube (28) federelastisch angeordnet ist, um ein Durchbiegen der Membran in axialer Richtung zu verhindern.

6. Vorrichtung nach Anspruch 4 oder 5, **dadurch gekennzeichnet,** daß der Stößel (26) nahe dem Schwingungsknoten (30) der Ringmembran (14) mit kurzem Hebelarm angreift, um die Ringmembran (14) nur wenig zu belasten.

# Fig.1

# Fig.2

# Fig. 3a

# Fig. 3b

# Fig. 3c